# EUROPEAN PATENT APPLICATION

(11) **EP 3 379 453 A1**
(43) Date of publication of application: **26.09.2018**
(21) Application number: 17465509.2
(22) Date of filing: 20.03.2017
(51) Int. Cl.: G06K 9/00

(54) **DEVICE FOR CALCULATING A POSITION ESTIMATE OF A VEHICULAR OBJECT**

(71) Applicant: Continental Automotive GmbH, 30165 Hannover (DE)
(72) Inventor: Miklos, Mihai, 300736 Timisoara (RO); Hirean, Camelia, 300208 Timisoara (RO); Schinteie, Larisa Ana-Maria, 300687 Timisoara (RO)
(74) Representative: Reuter, Andreas

(57) **Abstract**

The present invention relates to a device (10) for calculating a position estimate of a vehicular object. It is described to provide (210) a processing unit (30) with at least one image relating to a vehicular scene. The processing unit processes (220) an image of the at least one image to determine a first contact point on a ground surface between a first wheel of a vehicular object and the ground surface and processes the image of the at least one image to determine a second contact point on the ground surface between a second wheel of the vehicular object and the ground surface. The processing unit processes (230) the image of the at least one image to determine an axis of a road. The processing unit calculates (240) a position estimate of the vehicular object on the basis of the first contact point on the ground surface and the second contact point on the ground surface and the axis of the road. The calculation comprises determining an orientation vector between the first contact point on the ground and the second contact point on the ground surface. An output unit outputs (250) output information representative of the position estimate.

## Description

### FIELD OF THE INVENTION

The present invention relates to a device for calculating a position estimate of a vehicular object, to a system for calculating a position estimate of a vehicular object, to a method for calculating a position estimate of a vehicular object, as well as to a computer program element.

### BACKGROUND OF THE INVENTION

The general background of this invention is the field of driving warning and information provision systems.

A driver can frequently be faced with the situation when driving, where a car or other vehicle that is ahead of them may be in a position to pull into the part of the road along which the car being driven by the driver is proceeding. This can lead to a situation that can be dangerous.

There is a need to be able to address such a situation.

### SUMMARY OF THE INVENTION

It would be advantageous to have an improved device for providing position estimates of imaged vehicles.

The object of the present invention is solved with the subject matter of the independent claims, wherein further embodiments are incorporated in the dependent claims. It should be noted that the following described aspects and examples of the invention apply also for the device for calculating a position estimate of a vehicular object, the system for calculating a position estimate of a vehicular object, the method for calculating a position estimate of a vehicular object, and for the computer program element.

In a first aspect, there is provided a device for calculating a position estimate of a vehicular object, comprising:
- an input unit;
- a processing unit; and
- an output unit.

The input unit is configured to provide the processing unit with at least one image relating to a vehicular scene. The processing unit is configured to process an image of the at least one image to determine a first contact point on a ground surface between a first wheel of a vehicular object and the ground surface. The processing unit is also configured to process the image of the at least one image to determine a second contact point on the ground surface between a second wheel of the vehicular object and the ground surface. The processing unit is configured to process the image of the at least one image to determine an axis of a road. The processing unit is configured to calculate a position estimate of the vehicular object on the basis of the first contact point on the ground surface and the second contact point on the ground surface and the axis of the road, wherein the calculation of the position estimate of the vehicular object comprises a determination of an orientation vector between the first contact point on the ground and the second contact point on the ground surface. The output unit is configured to output information representative of the position estimate.

In this manner, the orientation of a motorbike, car, van, or lorry can be determined and an estimation can be made of a future position of that vehicular object on the basis of only one image acquired from one camera, and even when the vehicular object is stationary or moving slowly.

Thus, a position estimate of a vehicular object can be determined on the basis of one image, and a succession of images does not need to be captured and processed to deduce a movement vector for any object detected.

By calculating a position estimate of the vehicular object on the basis of contact points between wheels and the ground, the orientation of slowly moving cars can be determined on the basis of one image from one camera, and the orientation of even slowly moving or stationary cars can be determined without having to track their movement. Thus, image detection algorithms that detect features without having to process imagery to track features can be utilized, which enables a much faster determination of a position estimate of a vehicular object to be made, even for slowly moving and stationary vehicular objects.

In this way a line can be extended from this vector, that can used in the calculation of an estimated or deduced future position of the vehicular object. This can be done on the basis of only one image, and functions to provide orientation information and future position estimates for the vehicular object even when the vehicular object is stationary when the image was acquired.

In this manner, the orientation of the vehicular object relative to the road can be determined. For example, it can be determined if and where a line that extends through the first and second contact points on the ground intersects the axis, which could be a centre axis of a road. Thus it can be determined if a vehicular object ahead is positioned to come out of a side junction, and a determination can be made of expected future positions of that vehicular object, such as a car. This can be used to provide information useable for accident mitigation, for example.

In an example, the first wheel is located towards a side of the vehicular object and the second wheel is located towards the same side of the vehicular object.

In other words, for a car or van or lorry the first wheel and the second wheel are both located on the same side of the vehicular object. Thus the contact points on the ground are aligned with a fore-aft axis of the vehicular object. In this manner, from one image and even when the vehicular object is stationary a future position estimate of the vehicular object can be made.

To put this another way, by detecting a contact point between for example a front wheel and the ground on one side of a vehicular object and a contact point between for example a rear wheel and the ground on the same side of the vehicular object, the orientation of the vehicular object can be determined providing a position estimate. Also, having provided an orientation of the vehicular object and establishing a fore-aft direction of the vehicular object, an estimated future position of the vehicular object can be calculated or deduced.

In an example, the processing unit is configured to determine an angle between the orientation vector and the axis of the road.

In other words, an extension of the vector joining the contact points of a vehicular object's tyres that are on the same side of the vehicular object will intersect with an axis of a road, such as an axis defined by the lane markings down the middle of a road or an axis defined by the side of the road, unless the vehicular object is travelling parallel to that axis and the wheels of the vehicular object are positioned exactly one behind the other. Thus, an anticipated future position of the vehicular object with for example a centre line of the road can be determined, and as the angle between the road axis and the orientation vector of the vehicular object is known, the relative orientation of the vehicular object can be determined. Thus for example, if the imagery is acquired by an in car camera, the estimated future position of a vehicular object, that for example is coming out of a side junction, can be determined and can be computed relative to the estimated future position of the car capturing the imagery, making use of information such as the current speed of the car capturing the imagery. Thus, a determination can be made if the vehicular object coming out of a side junction poses a threat or not, and when a situation relating to that threat might occur.

In an example, the processing unit is configured to process the image of the at least one image to determine a width of the vehicular object.

In this manner, by taking into account the track width and wheel base dimensions, a future position estimation of detected vehicular objects can be improved through the use of kinematic models.

In an example, the at least one image was acquired by an onboard camera of a vehicle.

Thus in this manner, a standard vehicle camera that is viewing scenes external to the vehicle as part of navigation and/or safety systems, or as part of automatic driving systems can also be utilised to determine a position estimate for vehicular objects in the scene, and can be used to improve advanced driver assistance systems, for example to improve safety for the vehicle by enabling possible accident situations to be identified.

In a second aspect, there is provided a system for calculating a position estimate of a vehicular object, comprising:
- at least one camera; and
- a device for calculating a position estimate of a vehicular object according to the first aspect.

The device is configured to be located within or on a vehicle. The at least one camera is configured to be located within or on the vehicle, and the at least one camera is configured to acquire the at least one image relating to the vehicular scene.

In this manner, a camera based system is provided for a vehicle such as a motorbike, car, van, or lorry that can make use of existing cameras or use bespoke cameras that are looking at scenes outside of the vehicle a normal ADAS camera of that vehicle where the cameras are focussed on infinity, and the system enables a position estimate of vehicular objects around the car to be determined, enabling the orientation of a vehicular object to be determined and a future position of that vehicular object to be estimated.

In an example, the processing unit is configured to process the image to determine a travel-axis of a thoroughfare along which the vehicle travels as the axis of the road.

Thus, in this manner the orientation and estimated future positions of vehicular objects in a scene around a vehicle can be determined. Thus, it can be determined if the vehicular objects pose potential threats, such as from their orientation and possible estimated positions they could be potential collision threats. Appropriate warning or awareness information could then be given to the driver of the vehicle and/or other vehicle systems could be primed in case the vehicle has to perform an emergency stop, such as seat belts tightening, suspension becoming firmer etc.

To put this another way, an orientation of an imaged vehicle, which provides information such as the angle between the potential (the other vehicle is possibly not moving at the moment) movement vector of that imaged vehicle and the road axis (or future ego movement vector) of the road that the present vehicle having the system is travelling, providing a the point where the imaged vehicle will intersect the road axis (or future movement vector).

In a third aspect, there is provided a method for calculating a position estimate of a vehicular object, comprising:
a) providing a processing unit with at least one image relating to a vehicular scene;
b) processing with the processing unit an image of the at least one image to determine a first contact point on a ground surface between a first wheel of a vehicular object and the ground surface; and processing with the processing unit the image of the at least one image to determine a second contact point on the ground surface between a second wheel of the vehicular object and the ground surface;
c) processing with the processing unit the image of the at least one image to determine an axis of a road;
d) calculating with the processing unit a position estimate of the vehicular object on the basis of the first contact point on the ground surface and the second contact point on the ground surface and the axis of the road; wherein step d) comprises determining an orientation vector between the first contact point on the ground and the second contact point on the ground surface; and
e) outputting with an output unit output information representative of the position estimate.

According to another aspect, there is provided a computer program element controlling apparatus as previously described which, in the computer program element is executed by processing unit, is adapted to perform the method steps as previously described.

There is also provided a computer readable medium having stored the computer element as previously described.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic set up of an example of a device for calculating a position estimate of a vehicular object;
Fig. 2 shows a schematic set up of an example of a system for calculating a position estimate of a vehicular object;
Fig. 3 shows a method for calculating a position estimate of a vehicular object; and
Fig. 4 shows an example of a determination of contact points between a vehicle's wheels and a road and a determination of a road axis;
Fig. 5 shows an example where the contact points determined in Fig. 4 are connected;
Fig. 6 shows another example of a determination of contact points between a vehicle's wheels and a road and a determination of a road axis;
Fig. 7 shows an example where the contact points determined in Fig. 6 are connected.

### DETAILED DESCRIPTION OF EMBODIMENTS

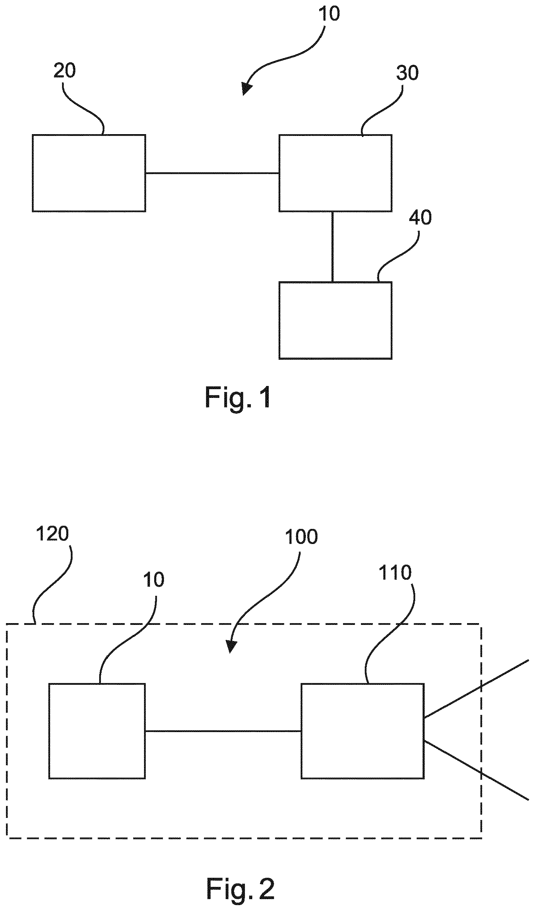

Fig. 1 shows an example of a device 10 for calculating a position estimate of a vehicular object. The device 10 comprises an input unit 20, a processing unit 30, and an output unit 40. The input unit 20 is configured to provide the processing unit 30 with at least one image relating to a vehicular scene. This is achieved by wired or wireless communication. The processing unit 30 is configured to process an image of the at least one image to determine a first contact point on a ground surface between a first wheel of a vehicular object and the ground surface. The processing unit 30 is also configured to process the image of the at least one image to determine a second contact point on the ground surface between a second wheel of the vehicular object and the ground surface. The processing unit 30 is configured to process the image of the at least one image to determine an axis of a road. The processing unit 30 is also configured to calculate a position estimate of the vehicular object on the basis of the first contact point on the ground surface and the second contact point on the ground surface and the axis of the road, wherein the calculation of the position estimate of the vehicular object comprises a determination of an orientation vector between the first contact point on the ground and the second contact point on the ground surface. The output unit 40 is configured to output information representative of the position estimate.

In an example, the processing unit is configured to process a second image of the at least one image to determine a third contact point on a ground surface between the first wheel of the vehicular object and the ground surface; and the processing unit is configured to process the second image of the at least one image to determine a fourth contact point on the ground surface between the second wheel of the vehicular object and the ground surface; and the processing unit is configured to calculate a position estimate of the vehicular object on the basis of the first contact point on the ground surface and the second contact point on the ground surface and the third contact point on the ground surface and the fourth contact point on the ground surface. In other words, although a single image can be processed to determine a position estimate of a vehicular object, such as a future position estimate of a car in the scene that could be at a side road junction, a second image can be similarly processed to improve the determination of the position estimate. For example, if the vehicular object is stationary by processing more than one image noise will be reduced and the position estimate improved and if in addition the first and second images were acquired by a car that was moving the vehicular object will be at slightly different positions in the scene in the two images, and again the determined position estimate will be improved. Similarly, if the vehicular object is moving, even very slowly, by processing two images the position estimate will be improved, as it can then take account of an estimated position at some future point in time from a determination of the vehicular object's speed. Similarly, if a third image is processed then noise is further improved, and if the vehicular object is in motion the rate of change of velocity (acceleration) of the vehicular can be determined again leading to an improved determination of a position estimate of the vehicular object, including an estimate of the future position of that vehicular object as a function of time.

In an example, the first and second images are acquired by the same camera and thus could be separated in time. In an example, the first and second images are acquired by different cameras, for example from a stereoscopic system, and as such the first and second images can be of the scene viewed from different positions, and could have been acquired at the same time or be acquired at different times.

In an example, the calculation of the position estimate of the vehicular object comprises a determination of a second orientation vector between the third contact point on the ground and the fourth contact point on the ground surface.

According to an example, the first wheel is located towards a side of the vehicular object and the second wheel is located towards the same side of the vehicular object.

According to an example, the processing unit is configured to determine an angle between the orientation vector and the axis of the road.

In an example, the processing unit is configured to determine an angle between the second orientation vector and the axis of the road. Thus, a better determination can be made of a position estimate of the vehicular object. For example, for a vehicular object that is positioned at a side junction and has moved between image frames, a determination can be made if it is turning left or right, and as such for imagery acquired by a car a determination can be made if the vehicular object will be turning across in front of the car or will be travelling ahead of the car in the same direction.

According to an example, the processing unit is configured to process the image of the at least one image to determine a width of the vehicular object.

According to an example, the at least one image was acquired by an onboard camera of a vehicle.

Fig. 2 shows an example of a system 100 for calculating a position estimate of a vehicular object. The system 100 comprises at least one camera 110 and a device 10 for calculating a position estimate of a vehicular object as described with reference to Fig. 1. The device 10 is configured to be located within or on a vehicle 120. The at least one camera 110 is configured to be located within or on the vehicle 120, and the at least one camera (which can be just one camera or a mono camera) is configured to acquire the at least one image relating to the vehicular scene.

In an example, the camera 110 is the input unit 20.

According to an example, the processing unit is configured to process the image to determine a travel-axis of a thoroughfare along which the vehicle travels as the axis of the road.

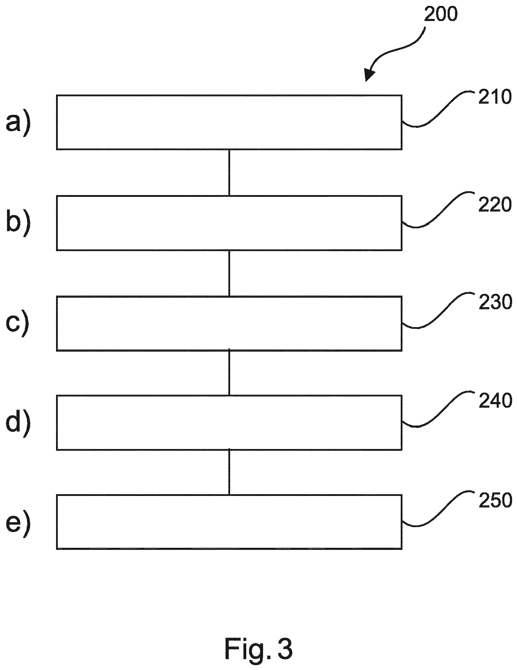

Fig. 3 shows a method 200 for calculating a position estimate of a vehicular object in its basic steps. The method 200 comprises:
in a providing step 210, also referred to as step a), providing a processing unit 30 with at least one image relating to a vehicular scene;
in a processing step 220, also referred to as step b), processing with the processing unit an image of the at least one image to determine a first contact point on a ground surface between a first wheel of a vehicular object and the ground surface, and processing with the processing unit the image of the at least one image to determine a second contact point on the ground surface between a second wheel of the vehicular object and the ground surface;
in a processing step 230, also referred to as step c), processing with the processing unit the image of the at least one image to determine an axis of a road;
in a calculating step 240, also referred to as step d), calculating with the processing unit a position estimate of the vehicular object on the basis of the first contact point on the ground surface and the second contact point on the ground surface and the axis of the road; wherein step d) comprises determining an orientation vector between the first contact point on the ground and the second contact point on the ground surface; and
in an outputting step 250, also referred to as step e), outputting with an output unit output information representative of the position estimate.

In an example, the first wheel is located towards a side of the vehicular object and the second wheel is located towards the same side of the vehicular object.

In an example, the method comprises processing the image with the processing unit to determine a width of the vehicular object.

In an example, the method comprises determining an angle between the orientation vector and the axis of the road.

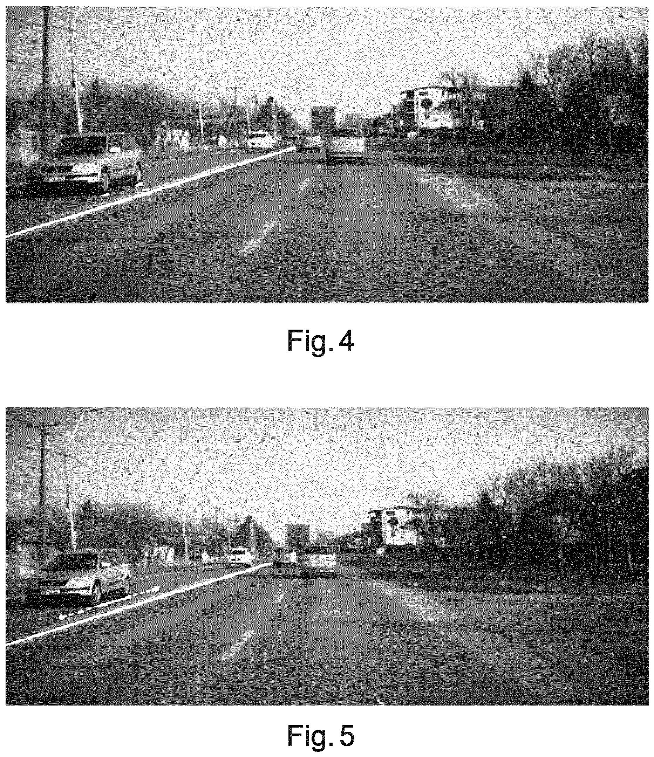

The device, system and method are now described in further detail with respect to Figs. 4-7.

Fig. 4 shows an imaged vehicular scene, where from that imaged scene contact points between the wheels of a vehicle in the image and the road are determined and an axis of the road is determined, which in this example is the middle lane marking for the road.

Image processing algorithms are used to detect the wheels of the image vehicles, the road surface, and determine a road axis for example from road markings and/or road boundaries. Further details regarding the detection of wheels can be found for example in the following publications: A. Grigoryev et al, "Vision-Based Vehicle Wheel Detector and Axle Counter", Proceedings 29th European Conference on Modelling and Simulation, ISBN: 978-0-9932440-0-1; and K. Hirose et al "Robust Extraction of Wheel Region for Vehicle Position Estimation using a Circular Fisheye Camera", IJCSNS International Journal of Computer Science and Network Security, VOL. 9 No. 12, December 2009. Further details regarding the detection of the road surface and road axis can be found in the following patent applications: US2004/0204812 A1, and US2013/0163821A1.

In Fig. 4, the middle lane (the determined road axis) is used as a reference to determine the orientation of the vehicle.

As shown in Fig. 5, after the contact points have been detected connected through or by a line. The extension of this line will intersect the middle lane at some point, except for the case when the 2 lines of parallel, which is in effect the situation shown in Fig. 5.

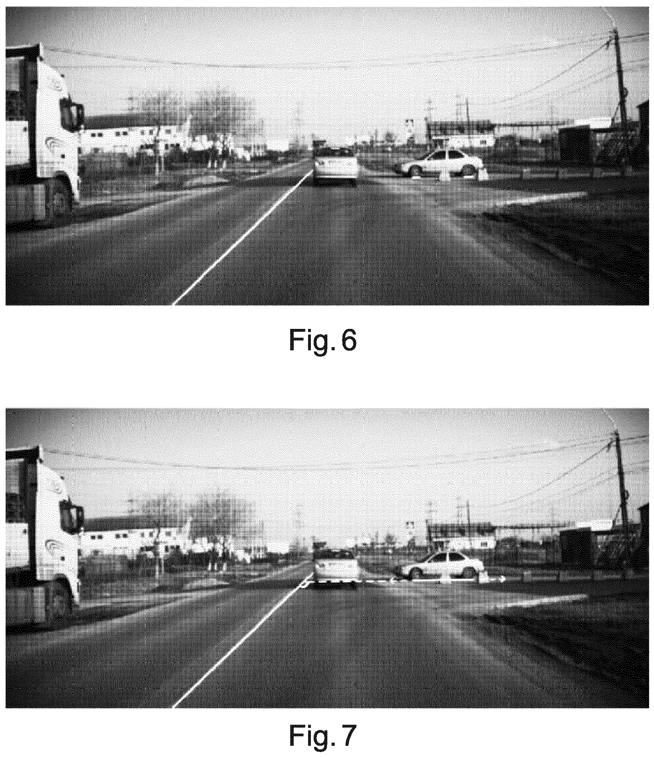

Fig. 6 shows another imaged vehicular scene, where from that imaged scene contact points between the wheels were vehicle in the image and the road are determined and again an axis of the road is determined.

As shown in Fig. 7 after the contact points have been detected, they are connected through or by a line. The extension of this line intersects the axis of the road (the middle lane marking) and the algorithm determines the angle between the 2 lines. From this, the relative orientation of the vehicle turning into the road can be provided.

Therefore, the algorithm only needs to detect one front and one rear contact point on the same side of a vehicle (this could be the fore and aft wheels of a bicycle or motorbike), and by connecting these points are current orientation of the vehicle can be calculated. By also detecting the road axis, the vehicle orientation can be calculated relative to the future position of the ego vehicle and the striving decision algorithms can be implemented which a very precise. In this manner, even when a vehicle being imaged is standing still and orientation vector can be computed in the future position vehicle committed used, before starts to move. And orientation of the vehicle can therefore be determined without having to track the movement of that vehicle, which provides fast and accurate orientation estimation algorithms and enables the orientation of vehicles which are standing still to be calculated. This can also be determined on the basis of images from a mono camera, and a stereo camera is not required. Even one image from the mono camera can be used to determine the orientation information.

In another exemplary embodiment, a computer program or computer program element is provided that is characterized by being configured to execute the method steps of the method according to one of the preceding embodiments, on an appropriate system.

The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.

According to a further exemplary embodiment of the present invention, a computer readable medium, such as a CD-ROM, is presented wherein the computer readable medium has a computer program element stored on it which computer program element is described by the preceding section.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A device (10) for calculating a position estimate of a vehicular object, comprising:
- an input unit (20);
- a processing unit (30); and
- an output unit (40);
wherein, the input unit is configured to provide the processing unit with at least one image relating to a vehicular scene;
wherein, the processing unit is configured to process an image of the at least one image to determine a first contact point on a ground surface between a first wheel of a vehicular object and the ground surface;
wherein, the processing unit is configured to process the image of the at least one image to determine a second contact point on the ground surface between a second wheel of the vehicular object and the ground surface;
wherein the processing unit is configured to process the image of the at least one image to determine an axis of a road;
wherein, the processing unit is configured to calculate a position estimate of the vehicular object on the basis of the first contact point on the ground surface and the second contact point on the ground surface and the axis of the road, wherein the calculation of the position estimate of the vehicular object comprises a determination of an orientation vector between the first contact point on the ground and the second contact point on the ground surface; and
wherein, the output unit is configured to output information representative of the position estimate.

2. Device according to claim 1, wherein the first wheel is located towards a side of the vehicular object and the second wheel is located towards the same side of the vehicular object.

3. Device according to any of claims 1-2, wherein the processing unit is configured to determine an angle between the orientation vector and the axis of the road.

4. Device according to any of claims 1-3, wherein the processing unit is configured to process the image of the at least one image to determine a width of the vehicular object.

5. Device according to any of claims 1-4, wherein the at least one image was acquired by an onboard camera of a vehicle.

6. A system (100) for calculating a position estimate of a vehicular object, comprising:
- at least one camera (110); and
- a device (10) for calculating a position estimate of a vehicular object according to any of claims 1-5;
wherein, the device is configured to be located within or on a vehicle (120); and
wherein, the at least one camera is configured to be located within or on the vehicle, and the camera is configured to acquire the at least one image relating to the vehicular scene.

7. System according to claim 6, wherein the processing unit is configured to process the image to determine a travel-axis of a thoroughfare along which the vehicle travels as the axis of the road.

8. A method (200) for calculating a position estimate of a vehicular object, comprising:
a) providing (210) a processing unit (30) with at least one image relating to a vehicular scene;
b) processing (220) with the processing unit an image of the at least one image to determine a first contact point on a ground surface between a first wheel of a vehicular object and the ground surface; and processing with the processing unit the image of the at least one image to determine a second contact point on the ground surface between a second wheel of the vehicular object and the ground surface;
c) processing (230) with the processing unit the image of the at least one image to determine an axis of a road;
d) calculating (240) with the processing unit a position estimate of the vehicular object on the basis of the first contact point on the ground surface and the second contact point on the ground surface and the axis of the road; wherein step d) comprises determining an orientation vector between the first contact point on the ground and the second contact point on the ground surface; and
e) outputting (250) with an output unit output information representative of the position estimate.

9. A computer program element for controlling a device according to any one of claims 1 to 5 and/or a system according to any one of claims 6-7, which when executed by a processor is configured to carry out the method of claim 8.

10. A computer readable medium having stored the computer program element of claim 9.
